(19) Europäisches Patentamt
European Patent Office
Office européen des brevets

(11) **EP 4 168 490 B1**

(12) **EUROPÄISCHE PATENTSCHRIFT**

(45) Veröffentlichungstag und Bekanntmachung des Hinweises auf die Patenterteilung:
**19.06.2024 Patentblatt 2024/25**

(21) Anmeldenummer: **21732923.4**

(22) Anmeldetag: **18.06.2021**

(51) Internationale Patentklassifikation (IPC):
**C08L 91/00** (2006.01)    **C09D 191/00** (2006.01)
**A01N 65/00** (2009.01)    **B41M 1/06** (2006.01)
**C09D 11/12** (2006.01)    **C09D 175/04** (2006.01)
**C10M 105/42** (2006.01)    **C08G 18/42** (2006.01)
**C08G 18/76** (2006.01)    **C09D 175/06** (2006.01)
**C10M 105/34** (2006.01)

(52) Gemeinsame Patentklassifikation (CPC):
**C08L 91/00; C08G 18/42; C08G 18/7621;**
**C09D 11/12; C09D 175/04; C09D 175/06;**
**C09D 191/00; C10M 105/34;** C08L 2205/08;
C10M 2205/18; C10M 2207/281

(86) Internationale Anmeldenummer:
**PCT/EP2021/066663**

(87) Internationale Veröffentlichungsnummer:
**WO 2021/259804 (30.12.2021 Gazette 2021/52)**

(54) **BIOBASIERTE ADDITIVE AUF BASIS VON MIKRONISIERTEN REISKLEIEWACHSEN**

BIO-BASED ADDITIVES BASED ON MICRONISED RICE BRAN WAXES

ADDITIFS BIOBASÉS À BASE DE CIRES MICRONISÉES DE SON DE RIZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2020 EP 20181497**

(43) Veröffentlichungstag der Anmeldung:
**26.04.2023 Patentblatt 2023/17**

(73) Patentinhaber: **Clariant International Ltd
4132 Muttenz (CH)**

(72) Erfinder:
• **WUNDLECHNER, Milena**
  **86690 Mertingen (DE)**
• **BODENDORFER, Simon**
  **86152 Augsburg (DE)**
• **KRATZER, Philipp**
  **86637 Wertingen (DE)**
• **BROEHMER, Manuel**
  **82194 Groebenzell (DE)**
• **NIEDERLEITNER, Tobias**
  **86707 Westendorf (DE)**

(74) Vertreter: **Clariant Produkte (Deutschland) GmbH
Patent Management
Industriepark Höchst, G 860
65926 Frankfurt am Main (DE)**

(56) Entgegenhaltungen:
EP-A1- 2 643 434          WO-A1-2014/060081
WO-A1-2014/060082      WO-A1-2014/131514
WO-A1-2015/117757      WO-A1-2017/009408
DE-A1-102018 116 113    JP-A- 2010 020 304

• **Anonymous: "Micronized rice bran wax (Podax), product data", , 1. Januar 2020 (2020-01-01), Seiten 1-4, XP055746561, Gefunden im Internet: URL:https://www.podax.com.cn/en/sub_produc ts/natural-wax-en/ [gefunden am 2020-11-03]**
• **Anonymous: "SPECIALTY FINE POWDERS AND EXFOLIANTS", , 1. April 2019 (2019-04-01), Seiten 1-20, XP055746565, Gefunden im Internet: URL:https://www.cerasuniversales.com/asset s/Marcas-Ceras-Universales.pdf [gefunden am 2020-11-03]**

- Anonymous: "Printing Inks & OPV's (brochure)", , 1. April 2020 (2020-04-01), Seiten 1-2, XP055746567, Gefunden im Internet: URL:http://www.micropowders.com/Files/brochures/PrintingInks.pdf [gefunden am 2020-11-03]
- Anonymous: "NatureFine R331 (Rice bran wax), product data sheet", , 1. April 2020 (2020-04-01), Seiten 1-1, XP055746570, Gefunden im Internet: URL:http://www.micropowders.com/Files/TDS/NatureFine%20R331%20TDS.pdf [gefunden am 2020-11-03]
- Anonymous: "Wax Additives for Seed Coatings and Agrochemicals (NatureFine R331)", , 1. September 2019 (2019-09-01), Seite 1, XP055746575, Gefunden im Internet: URL:http://67.199.103.45/Files/brochures/SeedCoatingsBulletin2015.pdf [gefunden am 2020-11-03]
- Anonymous: "Naturesoft 860R (rice bran wax powder)", , 1. April 2019 (2019-04-01), Seite 1, XP055746580, Gefunden im Internet: URL:http://www.mpipersonalcare.com/Files/brochures/Naturesoft860R.pdf [gefunden am 2020-11-03]
- CI Anonymous: "High Performance Wax Additives", , 1. April 2020 (2020-04-01), Seiten 1-8, XP055746593, Gefunden im Internet: URL:http://www.micropowders.com/Files/brochures/8page.pdf [gefunden am 2020-11-03]
- Anonymous: "High Performance Wax Additives", , 1. April 2018 (2018-04-01), Seiten 1-8, XP055746599, Gefunden im Internet: URL:http://www.micropowders.com/brochures/corporate-brochure.pdf [gefunden am 2020-11-03]
- Anonymous: "Fließbettstrahlmühle", , 17. Januar 2018 (2018-01-17), Seiten 1-2, XP055746647, Gefunden im Internet: URL:https://de.wikipedia.org/wiki/Fliessbettgegenstrahlmühle [gefunden am 2020-11-03]

**Beschreibung**

Die Erfindung betrifft mikronisierte Reiskleiewachsoxidate, auf diesen basierende mikronisierte Wachsadditive insbesondere für Druckfarben, Lacke und Beschichtungen, deren Herstellung sowie deren Verwendung.

Mikronisierte Wachsadditive (mWAs) werden beispielsweise in Druckfarben, Lacken und Beschichtungen in Mengen zwischen 0,5 und 5,0 Gew.-% angewendet, um diesen bestimmte Eigenschaften zu verleihen oder sie zu verbessern. Solche Eigenschaften sind beispielsweise Glanz oder Mattierung, Kratzbeständigkeit, Scheuerbeständigkeit, Gleitreibung und Haptik. Gegenüber nicht-mikronisierten Wachsadditiven bieten mikronisierte Wachsadditive den Vorteil, dass man sie entweder direkt oder in Form einer auf kaltem Weg hergestellten Dispersion zusetzen kann.

Als mikronisierte Wachsadditive werden Additive bezeichnet, die Wachse enthalten oder aus diesen bestehen, und die eine volumenmittlere Partikelgröße ($d_{50}$) zwischen 1 und 50 $\mu$m aufweisen. Üblicherweise werden zur Herstellung der mikronisierten Wachsadditive Wachse auf fossiler oder teilweise fossiler Rohstoffbasis eingesetzt, wie beispielsweise Montanwachse, Polyolefinwachse, Fischer-Tropsch-Wachse, Amidwachse oder Mischungen dieser Wachse. Neben Wachsen können mikronisierte Wachsadditive weitere Bestandteile enthalten. Als weitere Bestandteile können mikronisierte Wachsadditive beispielsweise synthetische Polymere (z.B. PTFE, Polyethylen, Polypropylen), Biopolymere (z.B. Zucker), anorganische Verbindungen (z.B. Diamantstaub) und Mahlhilfsmittel (z.B. Polyole) enthalten.

Für die Herstellung mikronisierter Wachse gibt es grundsätzlich zwei Verfahren. Das erste Verfahren ist ein Sprühprozess, bei dem man eine heiße Wachsschmelze durch eine Düse presst und das so erhaltene Wachspulver, falls erforderlich, einem Sichtungsprozess unterzieht.

Das zweite Verfahren ist ein Mahlprozess, wobei in Pastillen-, Schuppen- oder Pulverform vorliegende Wachse mittels spezieller Mahlaggregate, z.B. Strahlmühlen oder mechanische Mühlen mit integrierter Sichtung, mikronisiert werden.

In Druckfarben, Lacken und Beschichtungen kommen mikronisierte Wachse beider Herstellungsverfahren zum Einsatz.

Für den Einsatz in Druckfarben ist es vorteilhaft, wenn Wachsadditive unterschiedlicher Polarität zur Verfügung stehen, da die Druckfarben und Lacke je nach Anwendung sowohl lösemittelbasiert als auch wasserbasiert sein können.

Die bisher für die Herstellung mikronisierter Wachsadditive eingesetzten Wachse sind überwiegend fossilen Ursprungs und zeigen, mit Ausnahme der ebenfalls fossilen Montanwachse, keine oder nur sehr langsame Bioabbaubarkeit. Nachhaltige Alternativen sind aus verschiedenen Gründen kaum vorhanden. Viele Naturwachse sind weich, besitzen hohe Öl - oder Harzanteile und können deshalb entweder gar nicht mikronisiert werden (z.B. Bienenwachs) oder kleben als mikronisiertes Produkt wieder leicht zusammen und bilden bei geringstem Einfluss von Wärme oder Druck Agglomerate, die dann nur noch schlechte Dispergierbarkeit zeigen. Eine gute Dispergierbarkeit ist jedoch erforderlich, um die stabile Verteilung eines Wachsadditives in Lacken oder Druckfarben zu gewährleisten und die Absetzneigung der Inhaltsstoffe zu reduzieren. Weiterhin können Agglomerate zu Oberflächenfehlern auf lackierten oder bedruckten Substraten führen.

Neben anderen Wachsen basierend auf nachwachsenden Rohstoffen wurde die Verwendung von nicht-mikronisiertem Reiskleiewachs teilweise in Druckfarben und elektrophotographischen Tonern beschrieben (JP-A 2010-020304; 2010). Reiskleiewachse bestehen hauptsächlich aus Monoestern langkettiger, gesättigter, unverzweigter Monocarbonsäuren mit langkettigen, unverzweigten, aliphatischen Monoalkoholen (nachfolgend auch "genuine Ester" genannt). Vorherrschend sind im Säureanteil der Reiskleiewachs-Ester Behen- und Lignocerinsäure mit den Kettenlängen C22 und C24, und im Alkoholanteil der Reiskleiewachs-Ester die Kettenlängen C26, C28, C30, C32 und C34.

Der Gehalt an Wachsestern im entölten, rohen oder zusätzlich raffinierten Reiskleiewachs liegt in der Regel bei größer als 96 Gew.-%. In nicht-entöltem Reiskleiewachs kann der Gehalt an Wachsestern, je nach Gehalt des Reiskleieöls, auch bei nur 50 Gew.-% liegen. Daneben kann das Wachs freie Fettsäuren und weitere Bestandteile wie Phosphorlipide und Sterylester enthalten. Weitere als "Mindermengen-Bestandteile" anzusehende variable Bestandteile des Reiskleiewachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Als übliche Technik zur Aufhellung der entölten, rohen Reiskleiewachse gilt die klassische Bleichung mit Wasserstoffperoxid. Wasserstoffperoxid-gebleichte Reiskleiewachse sind gelblich und entsprechen in ihrem Estergehalt und in ihrer Säurezahl weitgehend den Ausgangswachsen. Solche Typen werden überwiegend als entölte und raffinierte Reiskleiewachse am Markt angeboten, zeigen jedoch, da die Mindermengen-Bestandteile im Produkt verbleiben, ebenfalls schwankende Produktqualität.

Oxidationsprodukte von Reiskleiewachs und deren Folgeprodukte sind aus der EP-A 2909273 aus 2015 bekannt. Sie werden durch Oxidation mit Chromschwefelsäure hergestellt. Hierdurch können Säurewachse in einem sehr hohen Säurezahlenbereich zwischen 70 mg KOH/g und 160 mg KOH/g erreicht werden. Diese können im Anschluss mit einem basischen Metallsalz teil- bzw. vollverseift werden, oder mit einem mono- oder polyvalenten Alkohol verestert werden.

Bei der Oxidation des Reiswachses mit Chromsäure kommt es im Wesentlichen zu einer Spaltung der Wachsester sowie einer *in-situ*-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 10-90% bezüglich der Estergruppen. Die auf diese Weise gebleichten Naturwachse besitzen zusätzlich zur gewünschten Aufhellung eine höhere Verseifungszahl und Säurezahl als die ungebleichten Wachse. Diese Wachse wurden bisher nicht in mikronisierter Form zur Verfügung gestellt. Das beschriebene Herstellungsverfahren liefert bei Reaktionstemperatur flüssiges Reiskleiewachs, dass nach dem Erkalten auf Raumtemperatur fest wird und dann in Form von Pellets oder Granulaten angeboten wird.

Mikronisierte Wachse auf Basis von nicht-oxidierten Reiskleiewachsen sind kommerziell als Micronized Rice Bran Wax der Firma Podax und unter den Produktnamen NatureFine R331 und Naturesoft 860R der Firma Micropowders erhältlich. Diese mikronisierten Produkte basieren auf ungebleichten oder mit Wasserstoffperoxid gebleichten aber nicht-oxdierten Reiskleiewachsen und werden z.B. als Mattierungsmittel für kosmetische Anwendungen und als Zusatzstoff in Druckfarben, Lacken und agrochemischen Beschichtungen angeboten.

Diese Produkte sind gekennzeichnet durch eine gelbliche Farbe die je nach Produkt mehr oder weniger stark ausgeprägt ist und durch eine Iodfarbzahl quantifiziert wird, die größer als 15 ist. Eine solche Iodfarbzahl wirkt sich ungünstig auf die Farbechtheit und Brillanz farbsensitiver Lacke und Druckfarben und Beschichtungen aus.

Wässrige Dispersion dieser Produkte sind bisher nicht am Markt erhältlich.

Den Produkten auf Basis nicht-oxidierter Reiskleiewachse ist gemein, dass Sie eine geringe Polarität aufweisen, da es bei der Bleichung zu keiner Oxidation der funktionellen Gruppen und damit zu keiner nennenswerten Erhöhung der Polarität kommt. Die Polarität eines Wachsesters wird maßgeblich sowohl durch die Säuregruppen, als auch die OH-Gruppen beeinflusst. Auch die Salze der Säure, die durch Verseifen mit einem basischen Metallsalz entstehen, tragen zur Polarität bei.

Die Polarität eines Stoffes hat Einfluss auf seine Dispergierbarkeit im Dispersionsmedium. Dieses kann bei Lacken und Druckfarben aus Wasser, verschiedenen unpolaren Lösemitteln, sowie Bindemitteln und weiteren Bestandteilen bestehen. Eine passende Einstellung der Polarität eines Wachsadditives zum Dispersionsmedium führt zu einer erhöhten Stabilität der Dispersion und ermöglicht den reduzierten Einsatz von Emulgatoren. Dies wirkt sich vorteilhaft auf die Stabilität und Beschichtungsqualität von Lacken und Druckfarben aus.

Es besteht somit ein großer Bedarf nach erneuerbaren und bioabbaubaren Komponenten für nachhaltige Druckfarben, Lacke und Beschichtungen, die sich leicht mikronisieren lassen, nicht zur Agglomeratbildung neigen und eine variable Polarität aufweisen, um die stabile Anwendung in diversen Dispersionsmedien zu ermöglichen.

Überraschenderweise wurde nun gefunden, dass sich oxidierte Reiskleiewachse mit variabler Polarität und deren Derivate (im Folgenden als Reiskleiewachsoxidate, RWO, bezeichnet) effizient zu mikronisierten Reiskleiewachsoxidaten sowie mikronisierten Wachsadditiven (mWA), umfassend Reiskleiewachsoxidate, vermahlen oder versprühen lassen und als solche Druckfarben, Lacken und Beschichtungen vorteilhafte Eigenschaften verleihen.

Die mikronisierten Reiskleiewachsoxidate können in Wasser sowie diversen Lösungsmitteln mit geringem oder ohne Einsatz von Emulgatoren stabile Dispersionen bilden und eignen sich zur Einstellung des Glanzes einer Flexodruckfarbe oder zur Mattierung von PUR-Lacken oder Offsetdruckfarben. Weiterhin seien die Verbesserung der Kratzbeständigkeit von Lacken sowie die Erhöhung der Scheuerbeständigkeit (gekennzeichnet durch einen reduzierten Farbabrieb) von Druckfarben, sowie die Verringerung der Gleitreibung und Verbesserung der Haptik von Druckfarben, Lacken und Beschichtungen genannt.

Gegenstand der Erfindung sind daher Reiskleiewachsoxidate, die optional derivatisiert wurden, mit einer volumenmittleren Partikelgröße $d_{50}$ (bestimmt nach ISO 13320-1) zwischen 1 und 50 $\mu$m, bevorzugt zwischen 5 und 15 $\mu$m, besonders bevorzugt von 7,0 und 13,0 $\mu$m sowie mikronisierte Wachsadditive (mWA), umfassend Reiskleiewachsoxidate und/oder derivatisierte Reiskleiewachsoxidate, mit einer volumenmittleren Partikelgröße $d_{50}$ zwischen 1 und 50 $\mu$m bevorzugt zwischen 5 und 15 $\mu$m, ganz besonders bevorzugt von 7,0 und 13,0 $\mu$m. Partikelgrößen zwischen 7,0 - 9,5 $\mu$m sind am meisten bevorzugt, da Partikelgrößen über 10 $\mu$m in vielen Standarddruckfarben und dünnschichtigen Lacken nicht eingesetzt werden können, weil hier die Partikelgröße die Nassfilmdicke überschreitet.

Unter Reiskleiewachsoxidaten, die optional derivatisiert wurden sind Reiskleiewachsoxidate zu verstehen, die nach der Oxidation entweder als freies Säurewachs vorliegen oder in einem nachfolgenden Schritt teilweise oder vollständig derivatisiert wurden und weiterhin auf eine volumenmittlere Partikelgröße $d_{50}$ (nach ISO 13320-1) von höchstens 50 $\mu$m mikronisiert wurden.

Ein zur Derivatisierung geeignetes Verfahren ist ein Verfahren ausgewählt aus der Gruppe umfassend Hydrolyse, Alkoholyse, Veresterung, Amidierung, Verseifung, Ethoxylierung, Anhydridbildung und Decarboxylierung. Falls es sich bei dem Derivatisierungsverfahren um eine Verseifung handelt, wird beispielsweise mit einem basischen Metallsalz, ausgewählt aus der Gruppe bestehend aus Metallhydroxiden (z.B. NaOH, KOH, Ca(OH)2 und Zn(OH)2, etc.), Metalloxiden (z.B. CaO, etc.), Metallcarbonaten (z.B. Na2CO3, CaCO3, etc.) und wässrigen Laugen (wie z.B. NaOH, KOH, etc.) verseift.

Bevorzugt wird mit Metallhydroxiden, ausgewählt aus der Gruppe bestehend aus NaOH, KOH, Ca(OH)2 und Zn(OH)2, oder CaO, oder Metallcarbonaten, ausgewählt aus der Gruppe bestehend aus Na2CO3 und CaCO3, oder mit wässrigen Laugen, ausgewählt aus der Gruppe bestehend aus NaOH und KOH, verseift, besonders bevorzugt mit Calciumhydroxiden, -oxiden, oder -carbonaten.

Vorzugsweise besitzen die optional derivatisierten Reiskleiewachsoxidate, eine Säurezahl (nach ISO 2114) von 1 - 140 mg KOH/g, bevorzugt zwischen 2 und 80 mg KOH/g, besonders bevorzugt zwischen 3 und 60 mg KOH/g.

In einer alternativen Ausführungsform der Erfindung werden die Reiskleiewachsoxidate für polare Systeme dargestellt und weisen dementsprechen eine Säurezahl (nach ISO 2114) zwischen 15 und 80 mg KOH/g, besonders bevorzugt zwischen 25 und 60 mg KOH/g, da in diesem Säurezahlbereich die besten Ergebnisse in polaren Dispersionsmedien erzielt werden

Bevorzugt weisen die optional derivatisierten Reiskleiewachsoxidate eine Verseifungszahl (nach ISO 3681) zwischen 30 und 185 mg KOH/g, bevorzugt zwischen 50 und 130 mg KOH /g, besonders bevorzugt zwischen 60 und 110 mg KOH/g auf.

Vorzugsweise weisen die optional derivatisierten Reiskleiewachsoxidate einen Tropfpunkt (nach ISO 2176) zwischen 70 und 110 °C auf.

In einer bevorzugten Ausführungsform haben die optional derivatisierten Reiskleiewachsoxidate eine Dichte zwischen 0,960 und 1,020 g/cm3, bevorzugt von 0,960 - 1,010 g/cm$^3$, besonders bevorzugt von 0,960 bis 1,000 g/cm$^3$.

Bei den optional derivatisierten Reiskleiewachsoxidaten handelt es sich vorzugsweise um Oxidationsprodukte von Reiskleiewachs mit Chromschwefelsäure und/oder deren Derivatisierungsprodukte bevorzugt deren Verseifungsprodukte, oder um eine Mischung aus einem Oxidationsprodukten von Reiskleiewachs mit Chromschwefelsäure und/oder deren Derivatisierungsprodukte, bevorzugt deren Verseifungsprodukte. Besonders bevorzugt werden die optional derivatisierten Reiskleiewachsoxidate mit einer Mischung aus Chromtrioxid und Schwefelsäure hergestellt.

Weiterhin umfasst die Erfindung ein mikronisiertes Wachsadditiv für Druckfarben, Beschichtungen und Lacke, das ein oder mehrere, optional derivatisierte Reiskleiewachsoxidate umfasst oder aus einem oder mehreren dieser optional derivatisierten Reiskleiewachsoxidate besteht.

Vorzugsweise enthält das mikronisierte Wachsadditiv zu 40 - 100 Gew.-%, ein oder mehrere, optional derivatisierte Reiskleiewachsoxidate, besonders bevorzugt zu 95 - 100 Gew.-%, ganz besonders bevorzugt zu 100 Gew.-%, bezogen auf die Gesamtmasse des mikronisierten Wachsadditivs.

Bevorzugt weist das mikronisierte Wachsadditiv einen Renewable Carbon Index (RCI, vgl. Tabelle 1) zwischen 80 und 100%, besonders bevorzugt von 100% auf.

Weiterer Gegenstand der Erfindung ist ein Verfahren zur Herstellung von optional derivatisierten Reiskleiewachsoxidaten oder von einem mikronisierten Wachsadditiv für Druckfarben, Lacke und Beschichtungen mit einer volumenmittleren Partikelgröße $d_{50}$ zwischen 1 und 50 $\mu$m bevorzugt zwischen 5 und 15 $\mu$m, ganz besonders bevorzugt zwischen 7,0 - 13,0 $\mu$m, am meisten bevorzugt zwischen 7,0 - 9,5 $\mu$m durch Vermahlung auf einer Mühle, bevorzugt auf einer Pralltellermühle oder auf einer Luftstrahlmühle, besonders bevorzugt auf einer Luftstrahlmühle hergestellt.

In einer alternativen Ausführungsform wird das mikronisierte Wachsadditiv durch Vermahlung einer Mischung unvermahlener Rohstoffe, enthaltend ein oder mehrere unvermahlene, optional derivatisierte Reiskleiewachsoxidate, auf einer Pralltellermühle oder auf einer Luftstrahlmühle, besonders bevorzugt auf einer Luftstrahlmühle hergestellt.

Weitere unvermahlene Rohstoffe können beispielsweise synthetische Polymere (z.B. PTFE, Polyethylen, Polypropylen), teilsynthetische Wachse (z.B. Amidwachs), Biopolymere (z.B. Zucker), anorganische Verbindungen (z.B. Diamantstaub), Mahlhilfsmittel (z.B. Polyole) und Stabilisatoren sein.

Die Mischung unvermahlener Rohstoffe kann eine Schmelzmischung der unvermahlenen Rohstoffe sein und liegt dann bevorzugt in Form von Pastillen, Schuppen oder Pulver vor.

Die Mischung unvermahlener Rohstoffe kann auch eine physikalische Mischung der unvermahlenen Rohstoffe sein, wobei dann jede Einzelkomponente bevorzugt in Form von Pastillen, Schuppen oder Pulver vorliegt.

Die physikalische Mischung unvermahlener Rohstoffe kann bereits vorgemischt in den Mahlraum gebracht werden, oder getrennt dosiert werden, sodass die physikalische Mischung unvermahlener Rohstoffe im Mahlraum vorliegt.

In einer weiteren Ausführungsform werden die unvermahlenen Rohstoffe zunächst getrennt voneinander vermahlen. Die mikronisierten Rohstoffe, umfassend optional verseifte Reiskleiewachsoxidate werden anschließend durch physikalische Vermischung zu einem mikronisierten Wachsadditiv zusammengefügt.

Weiterer Gegenstand der Erfindung ist die Verwendung von mikronisiertem Wachsadditiv, umfassend ein oder mehrere optional derivatisierte Reiskleiewachsoxidate in Druckfarben, Beschichtungen oder in Lacken.

Dort werden sie bevorzugt als Kratz- und Scheuerschutz und als Glanz- oder Mattierungsmittel für Druckfarben, Beschichtungen und Lacke eingesetzt.

Bei den Druckfarben handelt es sich bevorzugt um Druckfarben für Hochdruck- (z.B. Flexodruck), Flachdruck- (z.B. Offsetdruck), Tiefdruck-, Durchdruck (z.B. Siebdruck) oder elektronische Druckverfahren (Non-Impact Printing wie z.B. Inkjet oder Laserdruck).

Vorzugsweise handelt es sich bei den Druckfarben um wasserbasierte, lösemittelbasierte, ölbasierte oder sogenannte 100 %-Systeme (z.B. UV-härtende oder Pulversysteme), wie beispielsweise Offset-Druckfarben oder Flexodruckfarben. Bevorzugt handelt es sich um ölbasierte Offset-Druckfarben oder wasserbasierte Flexodruckfarben.

Bevorzugt handelt es sich bei den Lacken um Pulverlacke oder um physikalisch trocknende (wasser- oder lösemittelbasierend) und/oder Reaktivsysteme (z.B. 2K-Systeme, thermisch vernetzende Systeme, UV-Systeme). Besonders bevorzugt handelt es sich um ein wasserbasiertes 1-K PUR Lacksystem und ein lösemittelbasiertes 2-K PUR Lacksystem, welches vorzugsweise in Holzlacken Verwendung findet.

Bevorzugt wird das mikronisierte Wachsadditiv in einer Menge von 0,1 - 10,0% Gew.-%, bezogen auf die Gesamtmasse der Druckfarbe, Beschichtung oder Lacks eingesetzt, besonders bevorzugt in einer Menge von 0,2 - 4,0% Gew.-%.

In einer Ausführungsform wird das mikronisierte Wachsadditiv direkt zur Druckfarbe, Beschichtungen oder zum Lack zugegeben.

In einer alternativen Ausführungsform wird eine Dispersion des mikronisierten Wachsadditivs zur Druckfarbe, zur Beschichtung oder zum Lack gegeben. Bevorzugt handelt es sich bei dem Dispergens um Wasser.

In weiteren alternativen Verwendungen werden die mikronisierten Wachsadditive als Entgasungs-, Verlaufs-, Gleit- und/oder Dispergierungshilfsmittel für Kunststoffe eingesetzt oder als Hydrophobierungsmittel in Pflanzenschutzpräparationen eingesetzt.

**Substanzcharakterisierung**

Die in Tabelle 1 aufgeführten Standardmethoden dienen zur Bestimmung der Kennzahlen von natürlichen und synthetischen Wachsen und der Kennzahlen von Druckfarben, Lacken und Beschichtungen. Sie werden zur Charakterisierung der erfindungsgemäßen mikronisierten Reiskleiewachsoxidate, ihrer Ausgangsprodukte und der Vergleichssubstanzen verwendet.

Tabelle 1: Methodenübersicht

|  | Methode |
|---|---|
| Partikelgrößenbestimmung [$\mu$m] | ISO 13320-1 |
| Dichte [g/cm$^3$] | ISO 1183-3 |
| Glanz 60° | Die Bestimmung des Glanzgrads erfolgte mit einem micro-TRI-gloss-$\mu$-Glanzmessgerät (BYK-Gardner GmbH). |
| Gleitreibung | Der Gleitreibungskoeffizient wurde mit einem Friction-Peel Tester, Model 225-1, der Firma Thwing-Albert Instruments Company in Anlehnung an die ASTM-Methode D2534 ermittelt. Dazu wurde eine mit dem zu testenden Lack beschichtete Glasplatten auf das Analysengerät aufgebracht. Anschließend wurde ein mit Leder bezogener Metallschlitten (349g) auf die beschichtete Oberfläche aufgesetzt. Der Schlitten wurde anschließend mit konstanter Geschwindigkeit (15cm/min) über die beschichtete Glasoberfläche gezogen. Gemessen wurde die Kraft, die benötigt wird, um den Schlitten zu ziehen. Da der dynamische Gleitreibungskoeffizient ermittelt wurde, konnte die Anfangskraft, welche benötigt wird, um den Schlitten in Bewegung zu setzen, vernachlässigt werden. |
| Scheuerfestigkeit als möglichst niedriger Farbabrieb | Die Bestimmung der Scheuerfestigkeit erfolgte mit einem Quarant-Prüfaufbau. Als Gegensubstrat wurde nicht bedrucktes Papier verwendet, um das Scheuern in einem Papierstapel zu simulieren. Die Scheuerprüfung erfolgte mit einer Scheuerbelastung von 0,48 N/cm$^2$, einer Scheuergeschwindigkeit von 15 cm/sec und nach 50 Hüben. Beurteilt wurde die Intensität der durch das Scheuern auf das Gegenpapier übertragenen Farbe: $\Delta$ E Farbdifferenz nach DIN 6174 |

(fortgesetzt)

| | | Methode |
|---|---|---|
| | Kratzbeständigkeit | Zur Bestimmung der Kratzbeständigkeit wurde das zu prüfende Lacksystem auf eine Glasoberfläche aufgetragen und mit einem Härteprüfstab der Firma Erichsen (TYP 318) getestet. Die Kratzbeständigkeit wurde in Anlehnung an DIN ISO 1518 mit dem Härteprüfstab und einer Gravierspitze nach Bosch mit einem Durchmesser von 0,75 mm bestimmt. Die Kratzspur sollte ca. 10 mm lang sein und eine deutliche Markierung im Lack hinterlassen. Durch Justierung der Federspannung können verschiedene Kräfte auf die Lackoberfläche ausgeübt werden. Die maximale Kraft, die noch keine deutliche Markierung im Lack hinterlässt, wurde für unterschiedlichste Lackformulierungen bestimmt. Die Kraftmessung erfolgt in Schritten von 0,1 N. |
| | Haptik | Holzlackoberflächen wurden in einem geschlossenen Kasten befühlt und abstufend nach der Sensorik mit den Noten A, B, C bewertet, wobei A eine positive Sensorik vermittelt und C eine negative Sensorik. |
| | Säurezahl (SZ) [mg KOH/g] | ISO 2114 |
| | Verseifungszahl (VZ) [mg KOH/g] | ISO 3681 |
| | Tropfpunkt (TP) [°C] | ISO 2176 |
| | Nadelpenetrationszahl (NPZ) [mm$^{-1}$] | DIN 51579 |
| | Viskosität (Vis) [mPas] | DIN 53019<br>bei 100 °C bestimmt, wenn nicht anders angegeben |
| | Hydroxylzahl (OHZ) [mg KOH/g] | DGF M-IV 6 |
| | Iodfarbzahl (IFZ) [mg/100 ml] | DIN 6162 |
| | Thermogravimetrische Analyse (TGA) [Gew.-%] | DIN 51006<br>Von 25 bis 300°C bei 5K/min, dann 30 min bei 300°C. Messung des Massenverlusts bei Erreichen von 300°C und nach 30 min bei 300°C. |
| | Renewable Carbon Index | Der Renewable Carbon Index (RCI) beschreibt den Anteil von Kohlenstoffatomen aus nachwachsenden Rohstoffen in einer organischen Verbindung oder Mischung und wird nach folgender Formel berechnet:<br><br>$$RCI\,(\%) = \frac{\sum_{i=1}^{n}(M_{total} * M_i * BCC_i * 12\,/MW_i)}{\sum_{i=1}^{n}(M_{total} * M_i * BCC_i * 12\,/MW_i) + \sum_{i=1}^{n}(M_{total} * M_i * F(}$$<br><br>- $M_{total}$ = Gesamtmasse des mikronisierten Wachsadditivs<br>- $M_i$ = Masse der i-ten Komponente des mikronisierten Wachsadditivs (in %)<br>- $BCC_i$ = Anzahl biobasierter Kohlenstoffatome der i-ten Komponente des mikronisierten Wachsadditivs<br>- $FCC_i$ = Anzahl fossiler Kohlenstoffatome der i-ten Komponente des mikronisierten Wachsadditivs<br>- $MW_i$ = Molmasse der i-ten Komponente des mikronisierten Wachsadditivs<br>Anorganische Komponenten und Wasser werden bei der Berechnung des RCI nicht berücksichtigt. |

(fortgesetzt)

| | Methode |
|---|---|
| Durchsatzmessung | Für die Durchsatzmessung in der Labormühle wurde unter konstanten Bedingungen der Durchsatz des Rohstoffes in einer definierten Zeit, hier 30 min, bestimmt. Dafür wurde das erhaltene Mikronisat auf einer Waage ausgewogen und der Durchsatz in Gramm/Stunde dokumentiert. Der Durchsatz dient hier als Indikator für die Mahlbarkeit der eingesetzten Rohstoffe/Reiskleiewachsoxidate. |

Die Vermahlung der Reiskleiewachsoxidate erfolgte auf folgender Luftstrahlmühle:

Tabelle 2: Luftstrahlmühle

| Gerät: | Hosokawa Alpine Multiprozessanlage 100 AFG/50ZPS/50 AFP |
|---|---|
| Füllvolumen: | ca. 0.8 dm$^3$ |
| Mahlluftmenge: | ca. 80 m$^3$/h |
| Durchmesser Sichter: | 50 mm |
| Drehzahl Sichter: | max. 22000 min$^{-1}$ |
| Spezifikationen Sichter: | Schaufelkranz eingesetzt mit 8 Stück spiralig angeordneten Schaufeln |

Die erfindungsgemäßen, optional derivatisierten Reiskleiewachsoxidate, wie in Tabelle 3 aufgeführt, wurden durch Vermahlung auf der in Tabelle 2 dargestellten Mühle Luftstrahlmühle hergestellt.

Tabelle 3: Physikalisch-chemische Eigenschaften der erfindungsgemäßen (Erf.) mikronisierten Reiskleiewachsoxidate und der zu Vergleichzwecken (Vgl.) eingesetzten mWA

| Probe | TP [°C] | SZ [mg KOH/g] | VZ [mg KOH/g] | OHZ [mg KOH/g] | IFZ [mg/ 100ml] | Dichte [g/cm$^3$] | NPZ [mm-1] | $d_{50}$ [μm] MG1 | $d_{90}$ [μm] MG1 | $d_{50}$ [μm] MG2 | $d_{90}$ [μm] MG2 | Durchsatz [g/h] MG1 (8gm) | Durchsatz [g/h] MG2 (12 μm) |
|---|---|---|---|---|---|---|---|---|---|---|---|---|---|
| nSZ (erf.) | 78 | 19 | 89 | 5 | 12 | 0,98 | 1 | 8 | 14,6 | 12,4 | 24,7 | 1000 | 1916 |
| mSZ (erf.) | 77 | 52 | 113 | 4 | 3 | 0,99 | 3 | 7,5 | 19,3 | 11,9 | 23,4 | 1876 | 2462 |
| hSZ (erf.) | 76 | 128 | 168 | 5 | 1 | 1,00 | 3 | 7,4 | 13,3 | 11,9 | 21,4 | 1464 | 857 |
| seifSZ (erf.) | 108 | 15 | 79 | 12 | n.a. | 0,99 | 1 | 8,1 | 15,5 | 11,7 | 21,7 | 1594 | 984 |
| Montan wachs (Vgl.) | 96 | 16 | 140 | 17 | n.a. | 1,01 | | 8,9 | 15,7 | 11,2 | 23,1 | n.a. | 173 |
| Amidwachs (Vgl.) | 141,8 | 7,5 | 6 | - | 2,5 | 1,00 | 3 | 6,3 | 12,1 | 12,5 | 26,2 | n.a | n.a. |
| Podax BN-5 (Vgl.) | 78,9 | 12,6 | 88 | 19 | 36,8 | | 2 | 5,1 | 105 | - | - | - | - |
| Kerry-RBW (Vgl) | 78 | 6,3 | 81,4 | 8,7 | 120 | 0,978 | 4 | 8,4 | 15,5 | 11,7 | 23,0 | 1583 | 1514 |

Tabelle 4: Eingesetzte erfindungsgemäße und als Vergleichssubstanzen dienende mWAs und deren Charakterisierung

| Probe | Hersteller | Chem. Zusammensetzung | $d_{50}$ [μm] | RCI [%] | Polarität |
|---|---|---|---|---|---|
| nSZ-MG1 (Erf.) | Clariant Muster | Reiskleiewachsoxidat | 8,0 | 100 | niedrig |
| mSZ- MG1 (Erf.) | Clariant Muster | Reiskleiewachsoxidat | 7,5 | 100 | mittel |
| hSZ- MG1 (Erf.) | Clariant Muster | Reiskleiewachsoxidat | 7,4 | 100 | hoch |
| seifSZ- MG1 (Erf.) | Clariant Muster | teilverseiftes Reiskleiewachsoxidat | 8,1 | 100 | mittel |
| nSZ-MG2 | Clariant Muster | Reiskleiewachsoxidat | 12,4 | 100 | niedrig |
| mSZ-MG2 (Erf.) | Clariant Muster | Reiskleiewachsoxidat | 11,9 | 100 | mittel |
| hSZ-MG2 (Erf.) | Clariant Muster | Reiskleiewachsoxidat | 11,9 | 100 | hoch |
| seifSZ-MG2 (Vgl.) | Clariant Muster | teilverseiftes Reiskleiewachsoxidat | 11,7 | 100 | mittel |
| Montan-MG1 (Vgl.) | Clariant Int. Ltd. | teilverseiftes Montanwachs, (Ceridust 5551) | 8,9 | 0 | niedrig |
| Montan-MG2 (Vgl.) | ClariantMuster | teilverseiftes Montanwachs, | 11,2 | 0 | niedrig |
| Amid-MG1 (Vgl.) | Clariant Int. Ltd. | Amidwachs, Ceridust 3910 | 6,3 | 94 | niedrig |
| Amid-MG2 (Vgl.) | Clariant Int. Ltd | Amidwachs, Licowax C Micro-powder PM | 11,3 | 94 | niedrig |
| Podax- -MG1 (Vgl.) | Shanghai Tongs Science & Technology Co., Ltd. | Podax BN-5 Micronized Rice Bran | 8 | 100 | niedrig |
| Kerry-MG1 (Vgl.) | Yihai Kerry (Panjin) Oil & Grains Ind. Co., Ltd | crude rice bran wax | 8,4 | 100 | niedrig |
| Kerry-MG2 (vgl.) | Yihai Kerry (Panjin) Oil & Grains Ind. Co., Ltd | crude rice bran wax | 11,7 | 100 | niedrig |

**Anwendungstechnische Prüfungen:**

**Beispiel 1a: Flexodruckfarbe 1**

**Komponenten:**

| | | | |
|---|---|---|---|
| A) | Uni Q MB Blue 15.3 (12-111101-7.2260) (Fa. Siegwerk) | 20, 0 Gew.-% |
| | Dest. Wasser | 10, 0 Gew.-% |
| B) | Viacryl SC 175 W 40 WAIP (Fa. Cytec) | 35, 0 Gew.-% |
| | Dest. Wasser | 35, 0 Gew.-% |
| | | 100,0 Gew.-% |

Zugabe von mWA     0,5 Gew.-%/ 0,8 Gew.-%

Scheuertest 50 Hübe

**Beispiel 1b: Flexodruckfarbe 2**

**Komponenten:**

| | | |
|---|---|---|
| A) | HYDRO-X GLOSS Cyan wachsfrei (Fa. Huber group) | 30, 0 Gew.-% |
| B) | Viacryl SC 175 W 40 WAIP (Fa. Cytec) | 20, 0 Gew.-% |
| | Dest. Wasser | 50, 0 Gew.-% |
| | | 100,0 Gew.-% |

Zugabe von mWA     0,5 Gew.-%/ 0,8 Gew.-%

**Besonderheit:**

Scheuertest mit 100 Hüben

Die Basis-Scheuerfestigkeit der Druckfarbe ist höher. Um Unterschiede zu sehen, wurde daher die Anzahl an Hüben im Scheuertest erhöht. Die restliche Bedingungen entsprechen jenen, die auch für die Flexodruckfarbe 1 gelten.

**Herstellung:**

Die Komponenten A und B wurden jeweils durch Verdünnen mit destilliertem Wasser hergestellt. Anschließend wurde Komponente A in einem großen Becherglas vorgelegt und Komponente B langsam unter Rühren mit einem Propellerrührer zugegeben. Die Mischung wurde am Propellerrührer bei 1200 rpm für mind. 30 min homogenisiert.
Der auf diese Weise hergestellten Grunddruckfarbe wurde das mikronisiertes Wachsadditiv in einer Konzentration von 0,5 Gew.-% bzw. 0,8 Gew.-% zugegeben. Die mikronisierten Wachsadditive wurden langsam bei 500 rpm im Dissolver zudosiert, und anschließend bei 2000 rpm für 20 min in die Druckfarbe eingearbeitet.
Der Andruck erfolgte nach mindestens 24 h (schaumfrei) durch einen vollflächigen Auftrag von 6 $\mu$m Nassfilmstärke auf Papier der Qualität Algro Finess 80g/m$^2$. Die Prüfung der Andruckstreifen erfolgte nach 48 h Trocknungszeit.

**Prüfung des erfindungsgemäßen mikronisierten Wachsadditivs in einer wässrigen Flexodruckfarbe:**

Die Wirkung des mikronisierten Wachsadditivs wird durch den Glanz, den Gleitreibungskoeffizienten sowie die Scheuerfestigkeit der oben angegebenen Richtformulierung quantifiziert. In Flexodruckfarben ist beim Glanz ein hoher Wert erstrebenswert. Beim Gleitreibungskoeffizienten und der relativen Scheuerfestigkeit, als Farbabrieb definiert, sind in Flexodruckfarben, geringere Werte wünschenswert.

Tabelle 5: Anwendungstechnische Daten der Flexodruckfarben 1 und 2

| Eingesetzte Probe | Verwendete Farbe | Eingesetzte Menge [Gew.-%] | Glanz 60° [ ] | Gleitreibungskoeffizient (rel.) [ ] | Scheuerfestigkeit ($\Delta$ E, rel.) [ ] |
|---|---|---|---|---|---|
| nSZ-MG1 (Erf. 1) | Flexodruckfarbe 1 | 0,5 | 40,7 | 0,16 | 3,30 |
| | | 0,8 | 39,3 | 0,16 | 3,15 |
| mSZ-MG1 (Erf. 2) | Flexodruckfarbe 1 | 0,5 | 39,0 | 0,15 | 3,02 |
| | | 0,8 | 37,8 | 0,15 | 3,11 |

(fortgesetzt)

| Eingesetzte Probe | Verwendete Farbe | Eingesetzte Menge [Gew.-%] | Glanz 60° [ ] | Gleitreibungskoeffizient (rel.) [ ] | Scheuerfestigkeit ($\Delta$ E, rel.) [ ] |
|---|---|---|---|---|---|
| hSZ-MG1 (Erf. 3) | Flexodruckfarbe 1 | 0,5 | 40,0 | 0,14 | 2,88 |
| | | 0,8 | 38,2 | 0,14 | 3,03 |
| seifSZ-MG1 (Erf. 4) | Flexodruckfarbe 1 | 0,5 | 40,1 | 0,15 | 3,11 |
| | | 0,8 | 38,6 | 0,15 | 3,79 |
| Montan-MG1 (Vgl. 1) | Flexodruckfarbe 1 | 0,5 | 35,4 | 0,16 | 3,26 |
| | | 0,8 | 35,0 | 0,16 | 3,39 |
| Amid-MG1 (Vgl. 2) | Flexodruckfarbe 1 | 0,5 | 36,0 | 0,16 | 3,30 |
| | | 0,8 | 33,3 | 0,16 | 3,78 |
| Kerry-MG1 (Vgl. 4) | Flexodruckfarbe 2 | 0,5 | 39,8 | 0,21 | 3,1 |
| | | 0,8 | 37,7 | 0,19 | 3,1 |
| nSZ-MG1 (Erf. 5) | Flexodruckfarbe 2 | 0,5 | 35,1 | 0,17 | 4,5 |
| | | 0,8 | 37,7 | 0,17 | 3,8 |
| mSZ-MG1 (Erf. 6) | Flexodruckfarbe 2 | 0,5 | 37,8 | 0,15 | 3,35 |
| | | 0,8 | 35,6 | 0,16 | 2,82 |
| hSZ-MG1 (Erf. 7) | Flexodruckfarbe 2 | 0,5 | 38,0 | 0,16 | 3,1 |
| | | 0,8 | 35,2 | 0,14 | 3,02 |
| seifSZ-MG1 (Erf. 8) | Flexodruckfarbe 2 | 0,5 | 39,7 | 0,17 | 3,3 |
| | | 0,8 | 36,4 | 0,16 | 2,7 |
| Podax-MG1 (Vgl.3) | Flexodruckfarbe 2 | 0,5 | 35,6 | 0,15 | 3,2 |
| | | 0,8 | 33,6 | 0,16 | 3,1 |
| Montan-MG1 | Flexodruckfarbe 2 | 0,5 | 37,4 | 0,18 | 3,14 |
| | | 0,8 | 35,7 | 0,18 | 3,05 |

Die erfindungsgemäßen Beispiele aus Tabelle 5 (Erf. 1- 4) zeigen im Vergleich mit dem Montan-MG1 (Vgl.1), dem Amid-MG1 (Vgl. 2), und dem Podax-MG1 (Vgl. 3) gleichzeitig einen höheren Glanz und einen vergleichbaren oder geringen Gleitreibungskoeffizienten als die mit den zu Vergleichswachsen hergestellten Flexodruckfarben.

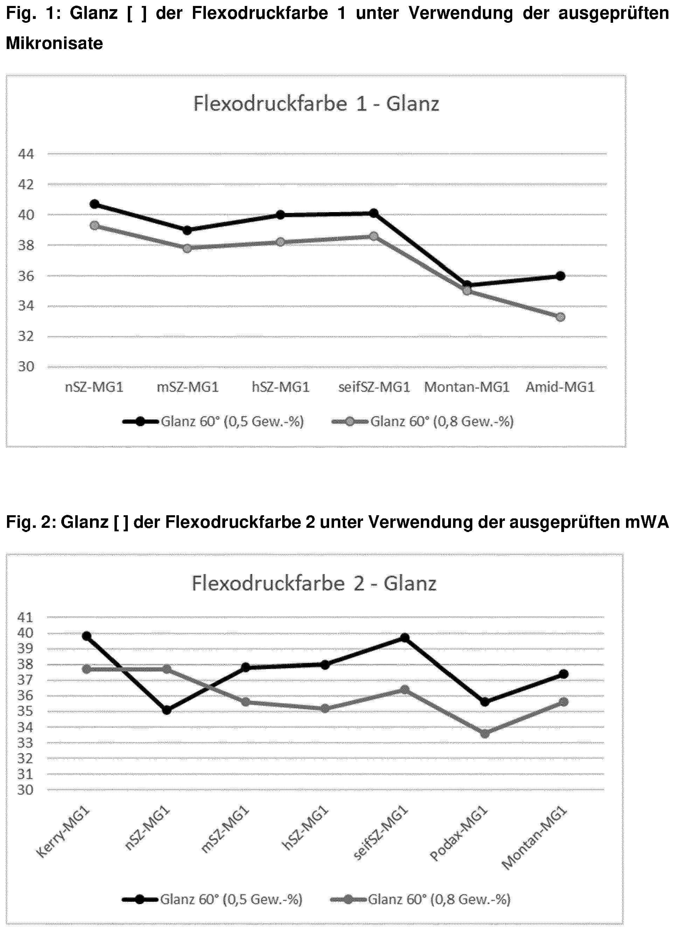

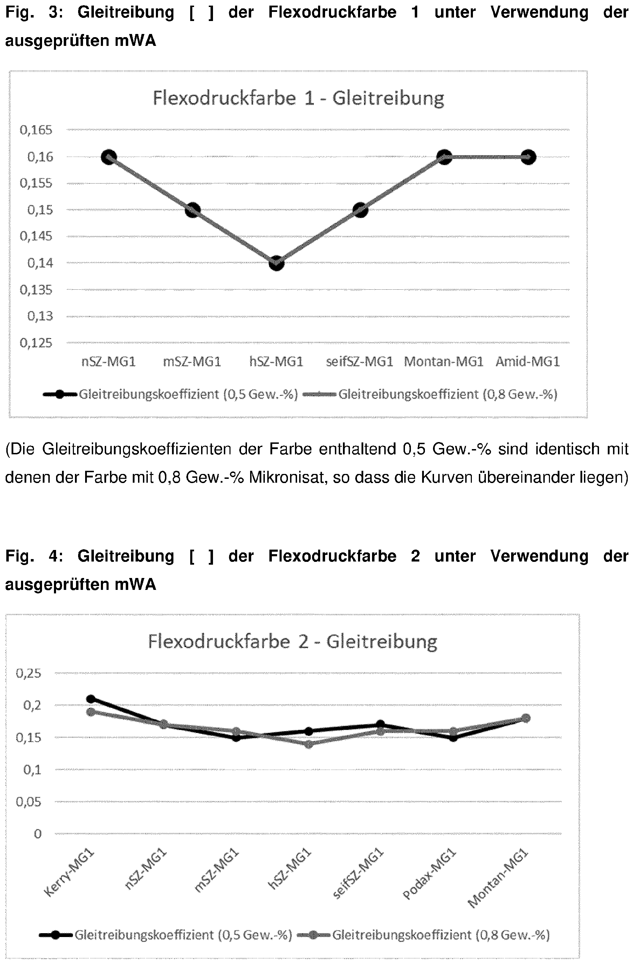

Aus den Figuren 1-4 lässt sich entnehmen, dass die steigende Polarität der erfindungsgemäßen Reiskleiewachsoxidate (Tabelle 5, Erf. 1-8) in der Reihe von der niedrigen zur höheren Polarität (Erf. 1, 5 < Erf. 2, 6 < Erf. 3,7 ~ Erf. 4,8) einen günstigen Einfluß auf die Gleitreibung der eingesetzten Flexodruckfarbe hat. Desweiteren ist der in einer Flexodruckfarbe gewünschte Glanz für alle erfindungsgemäßen Reiskleiewachsoxidate höher als als der von Podax-MG1 (Vgl. 3). Kerry-MG1 (Vgl. 4) zeigt in der Flexodruckfarbe zwar einen etwas höheren Glanz, erzielt jedoch deutlich schlechtere Werte für die Gleitreibung, so dass die erfindungsgemäßen Reiskleiewachsoxidate, insb. jene mit erhöhter Polarität (Erf. 3, Erf. 4, Erf. 7, Erf. 8), in der Flexodruckfarbe die besten Eigenschaften aufweisen.

**Beispiel 2: Offsetdruckfarbe**

**Komponenten:**

| | |
|---|---|
| A) F&E-5004 Cyan wachsfreie Öko-Farbe (Fa.Siegwerk) | 100 Gew.-% |
| B) Zugabe von mWA zur Grund-Offsetfarbe | 1,5 Gew.-% / 3,0 Gew.-% |

Die Grund-Offsetfarbe wurde mit dem mWA versetzt und bei 3000 rpm für 5 min im Speedmixer homogenisiert.

Der Andruck erfolgte an einer Offset-Labordruckanlage auf Offset-Papier mit einer Auftragsmenge von 10,0 $\pm$ 0,5 mg/m². Die Prüfung erfolgte nach 48 h Trocknungszeit im Klimaraum bei 23°C und einer Luftfeuchtigkeit von 50%.

**Prüfung des erfindungsgemäßen mikronisierten Wachsadditivs in einer Offset-Druckfarbe:**

Die Wirkung des mikronisierten Wachsadditivs in Offsetdruckfarben wird durch den Gleitreibungskoeffizient sowie die Scheuerfestigkeit in der oben angegebenen Richtformulierung quantifiziert. Beim Gleitreibungskoeffizienten und der relativen Scheuerfestigkeit, als Farbabrieb definiert, sind geringere Werte wünschenswert. Des Weiteren hat das mikronisierte Wachsadditiv einen Einfluss auf den Glanz.

Tabelle 6: Anwendungstechnische Daten einer Offsetdruckfarbe

| Eingesetzte Probe | Eingesetzte Menge [Gew.-%] | Glanz 60° [ ] | Gleitreibungskoeffizient (rel.) [ ] | Scheuerfestigkeit ($\Delta$ E, rel.) [ ] |
|---|---|---|---|---|
| nSZ-MG1 (Erf.9) | 1,5 | 40 | 0,39 | 5,31 |
| | 3,0 | 29,8 | 0,36 | 3,36 |
| mSZ-MG1 (Erf. 10) | 1,5 | 39,8 | 0,54 | 3,86 |
| | 3,0 | 41,5 | 0,25 | 4,44 |
| seifSZ-MG1 (Erf. 11) | 1,5 | 35,8 | 0,37 | 4,51 |
| | 3,0 | 41,8 | 0,34 | 4,12 |
| Montan-MG1 (Vgl. 5) | 1,5 | 43,1 | 0,57 | 13,40 |
| | 3,0 | 45,6 | 0,30 | 8,52 |
| Amid-MG1 (Vgl. 6) | 1,5 | 44,4 | 0,54 | 15,06 |
| | 3,0 | 44,2 | 0,3 | 14,51 |

Die erfindungsgemäßen Beispiele (Erf. 9/10/11) aus Tabelle 6 zeigen im Vergleich mit dem Montan-MG1 (Vgl. 5) oder Amid-MG1 (Vgl. 6) gleichzeitig einen verringerten Glanz, einen erniedrigten relativen Gleitreibungskoeffizienten so wie eine bessere Scheuerfestigkeit (geringerer Farbabrieb) der hergestellten Offsetdruckfarbe.

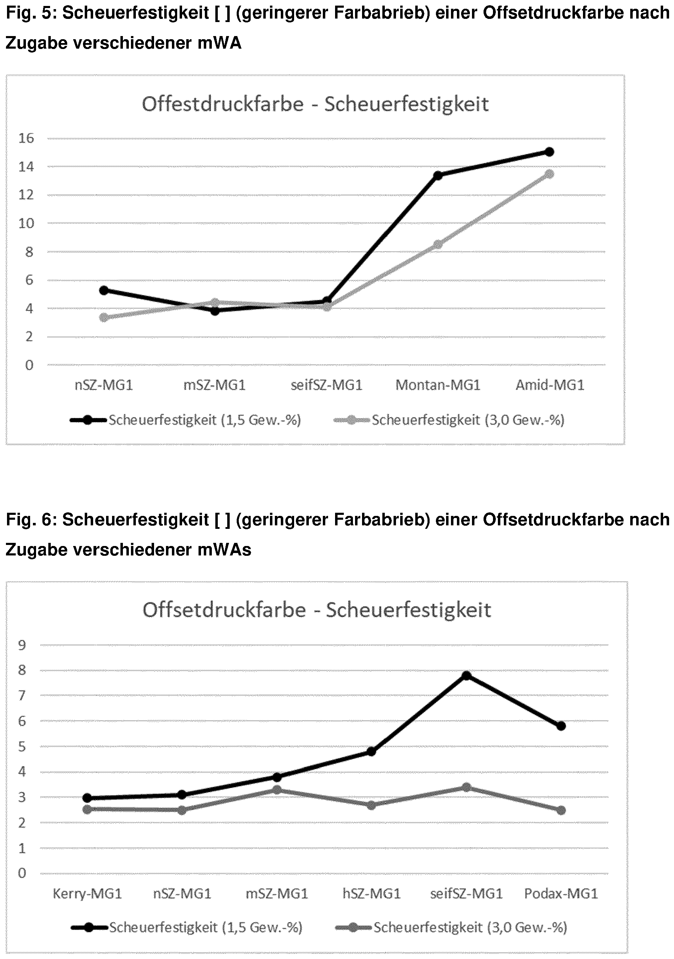

Figur 5 ist zu entnehmen, dass der Farbabrieb bei Verwendung der erfindungsgemäßen Reiskleiewachse gegenüber dem Montan-MG1 oder Amid-MG1 deutlich reduziert ist und damit ein verbesserter Scheuerschutz der Druckfarbe auf der Papieroberfläche erzielt wird.

Tabelle 7: Anwendungstechnische Daten einer Offsetdruckfarbe

| Eingesetzte Probe | Eingesetzte Menge [Gew.-%)] | Glanz 60° [ ] | Gleitreibungskoeffizient (rel.) [ ] | Scheuerfestigkeit ($\Delta$ E, rel.) [ ] |
|---|---|---|---|---|
| Kerry-MG1 (Vgl. 7) | 1,5 | 43,6 | 0,24 | 3,0 |
| | 3,0 | 38,4 | 0,17 | 2,5 |
| nSZ-MG1 (Erf.12) | 1,5 | 40,7 | 0,30 | 3,1 |
| | 3,0 | 39,7 | 0,21 | 2,5 |
| mSZ-MG1 (Erf. 13) | 1,5 | 43,8 | 0,28 | 3,8 |
| | 3,0 | 42,0 | 0,23 | 3,3 |
| hSZ-MG1 (Erf.14) | 1,5 | 45,4 | 0,29 | 4,8 |
| | 3,0 | 43,7 | 0,29 | 2,7 |
| seifSZ-MG1 (Erf. 15) | 1,5 | 43,4 | 0,3 | 7,8 |
| | 3,0 | 39,6 | 0,18 | 3,4 |

(fortgesetzt)

| Eingesetzte Probe | Eingesetzte Menge [Gew.-%)] | Glanz 60° [ ] | Gleitreibungskoeffizient (rel.) [ ] | Scheuerfestigkeit (Δ E, rel.) [ ] |
|---|---|---|---|---|
| Podax-MG1 (Vgl. 8) | 1,5 | 44,9 | 0,29 | 5,8 |
| | 3,0 | 38,5 | 0,16 | 2,5 |

Figur 6 zeigt den Vergleich der am Markt erhältlichen mikronisierten Reiskleiewachse (Vgl. 7 und 8) und der erfindungsgemäßen Reiskleiewachse.Es ist sichtbar, dass die erfindungsgemäßen wenig polaren Reiskleiewachsoxidate (Erf. 12-13) schon bei relativ geringer Zugabe von 1,5 Gew.-% mWA eine sehr gute Scheuerfestigkeit (geringer Farbabrieb) zeigen, die mit Podax-MG1 (Vgl. 8) erst bei einer Zugabemengen von 3 Gew.-% erzielt werden kann. Hier zeigt sich, dass in der unpolaren Offsetdruckfarbe ein niedriger Polaritätsbereich besonders geeignet ist.

Somit ergibt sich insbesondere für die weniger polaren Reiskleiewachsoxidaten ein gewisser Gewichts- und Kostenvorteil für die Offsetdruckfarbe.

Zudem zeichnen sich die erfindungsgemäßen Reiskleiwachsoxidate durch Ihre besonders helle Farbe aus (s. IFZ, Tabelle 3). Das Kerry-Reiskleiewachs (Vgl. 7) ist deutlich dunkler.

**Beispiel 3: Wässriger 1-K PUR Lack**

**Komponenten:**

| | |
|---|---|
| a) Bayhydrol UH 2342 | 91,0 Gew.-% |
| b) Entmineralisiertes Wasser | 3,1 Gew.-% |
| c) Dipropylenglykoldimethylether | 3,1 Gew.-% |
| d) BYK 028 | 0,8 Gew.-% |
| e) BYK 347 | 0,5 Gew.-% |
| f) Schwego Pur 6750 5%ig in Wasser | 1.5 Gew.-% |
| | 100,0 Gew.-% |
| Zugabe von mWA | 2,0/4,0 Gew.-% |

Für die Herstellung des Lackes wurden die Komponenten a) bis f) in der angegebenen Reihenfolge an einem Propellerrührer gemischt. Die Rührzeit betrug mind. 20 min bei ca. 1000 rpm.

Dem auf diese Weise hergestellten Lack wurden im Dissolver bei 500 rpm mikronisiertem Wachsadditiv in einer Konzentration von 2 % bzw. 4 % zugegeben. Das mikronisierte Wachsadditiv wurde an einem Dissolver bei 2000 rpm für 20 min eingearbeitet.

Zur Herstellung der Proben wurden Nassfilme von 60 $\mu$m auf Glasplatten aufgerakelt. Die Prüfkörper zur Prüfung der Haptik wurden durch einen dreischichtigen (Kreuzgang) Pinselauftrag mit Zwischenschliff auf unbehandelte Vollholzplatten hergestellt.

Die Prüfung erfolgte nach 48 h im Klimaraum bei 23°C und einer Luftfeuchtigkeit von 50%.

**Prüfung des erfindungsgemäßen mikronisierten Wachsadditivs in einem wässrigen 1-komponentigen PUR Lackes:**

Die Wirkung des mikronisierten Wachsadditivs wird durch den Gleitreibungskoeffizient sowie die Scheuerfestigkeit in der oben angegebenen Richtformulierung unter Verwendung zweier unterschiedlicher Mahlgrade quantifiziert. Bei Gleitreibungskoeffizienten sind in 1-K PUR Lacken geringere Werte wünschenswert. Bei der Kratzbeständigkeit sind in 1-K PUR Lacken hohe Werte wünschenswert. Des Weiteren hat mWA einen Einfluss auf den Glanz des 1-K PUR Lacks.

**Beispiel 3a: 1-K PUR Lack, mWA mit d$_{50}$ von ca. 12 $\mu$m**

Tabelle 8: 1-K PUR Lack, mWA mit $d_{50}$ von ca. 12 $\mu$m

| Eingesetzte Probe | Eingesetzte Menge [Gew.-%] | Glanz 60° [ ] | Gleitreibungskoeffizient (rel.) [ ] | Kratzbeständigkeit [N] | Haptik [ ] |
|---|---|---|---|---|---|
| nSZ-MG2 (Erf. 16) | 2,0 | 73,5 | 0,45 | 0,5 | A |
| | 4,0 | 37,1 | 0,42 | 0,5 | A |
| mSZ-MG2 (Erf. 17) | 2,0 | 66,2 | 0,44 | 0,6 | A |
| | 4,0 | 29,9 | 0,41 | 0,6 | A |
| hSZ-MG2 (Erf. 18) | 2,0 | 68,4 | 0,41 | 0,5 | A |
| | 4,0 | 32,7 | 0,38 | 0,5 | A |
| seifSZ-MG2 (Erf. 19) | 2,0 | 63,5 | 0,40 | 0,5 | A |
| | 4,0 | 30,7 | 0,38 | 0,5 | A |
| Montan-MG2 (Vgl. 9) | 2,0 | 72,0 | 0,45 | 0,5 | B |
| | 4,0 | 38,3 | 0,43 | 0,5 | B |
| Amid-MG2 (Vgl. 10) | 2,0 | 71,4 | 0,47 | 0,4 | C |
| | 4,0 | 32,8 | 0,47 | 0,5 | C |

Die erfindungsgemäßen Beispiele (Erf. 16-19) aus Tabelle 8 zeigen im Vergleich mit den Vergleichssubstanzen (Vgl. 9 und 10) einen geringen Gleitreibungskoeffizienten und eine hohe Kratzbeständigkeit. Zudem haben die erfindungsgemäßen Beispiele einen Einfluss auf den Glanz des 1-K PUR Lacks.

Des Weiteren wurde mit den erfindungsgemäßen Beispielen eine Verbesserung des haptischen Eindruckes gegenüber den Vergleichssubstanzen erzielt. Diese zeigt sich in einem sensorisch weicherem und trockenerem Oberflächengriff, der im Blindtest als angenehm glatt eingestuft wurde.

**Beispiel 3b: 1-K PURLack, mWA mit $d_{50}$ von ca. 8 $\mu$m**

Tabelle 9: 1-K PUR Lack, mWA mit $d_{50}$ von ca. 8 $\mu$m

| Eingesetzte Probe | Eingesetzte Menge [Gew.-%] | Glanz 60° [ ] | Gleitreibungskoeffizient (rel.) [ ] | Kratzbeständigkeit [N] | Haptik [ ] |
|---|---|---|---|---|---|
| Kerry-MG1 (Vgl. 11) | 2,0 | 55,4 | 0,4 | 1,05 | B |
| | 4,0 | 26,9 | 0,38 | 0,8 | B |
| nSZ-MG1 (Erf. 20) | 2,0 | 59,4 | 0,4 | 0,7 | A |
| | 4,0 | 29,8 | 0,38 | 0,7 | A |
| mSZ-MG1 (Erf. 21) | 2,0 | 52,2 | 0,36 | 0,6 | A |
| | 4,0 | 26 | 0,35 | 0,65 | A |
| hSZ-MG1 (Erf. 22) | 2,0 | 55,3 | 0,39 | 0,7 | A |
| | 4,0 | 26,7 | 0,35 | 0,7 | A |
| seifSZ-MG1 (Erf. 23) | 2,0 | 55,2 | 0,36 | 0,5 | A |
| | 4,0 | 24,4 | 0,35 | 0,75 | A |
| Montan-MG1 (Vgl. 12) | 2,0 | 58,7 | 0,39 | 0,5 | B |
| | 4,0 | 25,9 | 0,35 | 0,6 | B |
| Podax-MG1 (Vgl. 13) | 2,0 | 60,4 | 0,38 | 0,6 | B |
| | 4,0 | 30,3 | 0,35 | 0,65 | B |

Die Anwendungsdaten wurden zusätzlich grafisch ausgewertet.

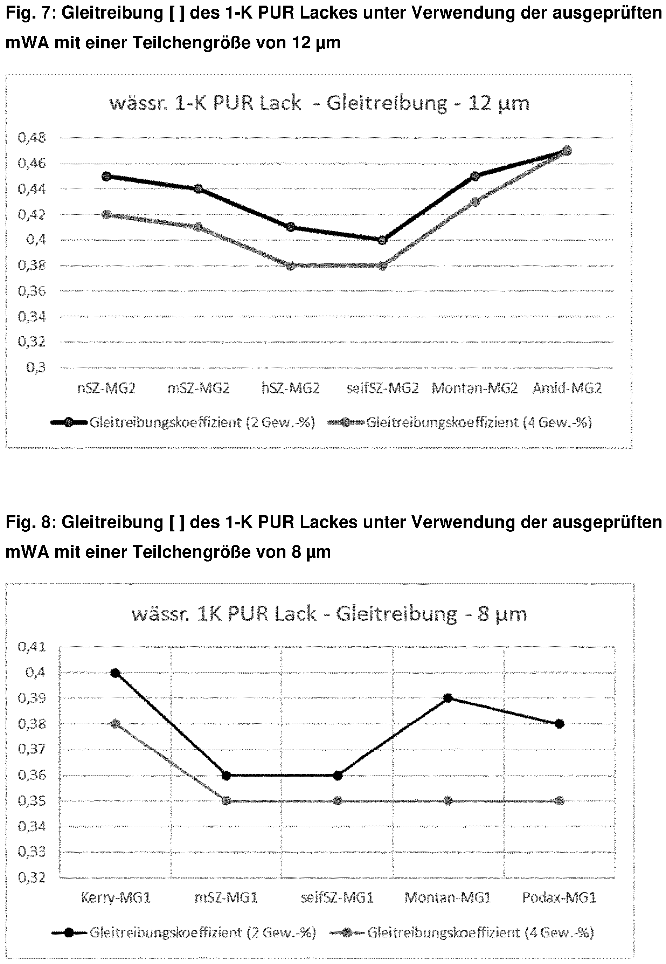

Die Figuren 7 und 8 zeigen die Gleitreibungskoeffizienten zweier 1-K PUR Lack-Ansätze nach Zugabe verschiedener mikronisierter Wachsadditive mit unterschiedlichen Mahlgraden.

Es wird die Gleitreibung bei zwei unterschiedlichen Mahlgraden dargestellt. Es zeigt sich, dass die polareren Reiskleiewachsoxidate mSZ, hSZ und seifSZ im wässrigen 1-K PUR Lack die Gleitreibung gegenüber Montan-MG2 (Vgl. 9), Amid-MG2 (Vgl. 10), sowie gegenüber Kerry-MG1 (Vgl.11) und Podax-MG1 (Vgl. 13) reduzieren.

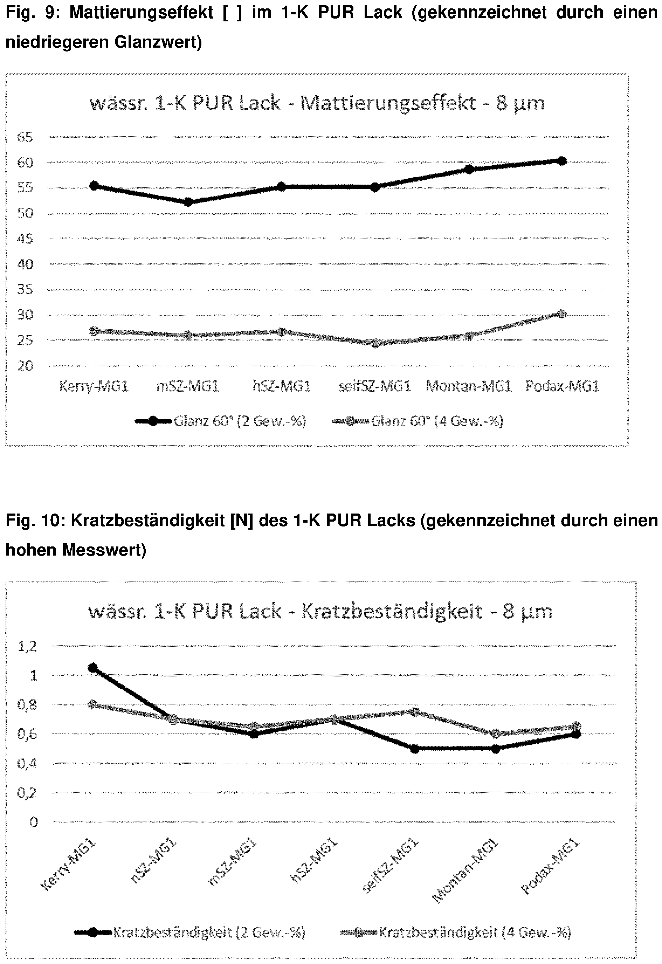

Die Figuren 9 und 10 beschreiben den Mattierungseffekt und die Kratzbeständigkeit zweier 1-K PUR Lack-Ansätze nach Zugabe verschiedener mikronisierter Wachsadditive mit unterschiedlichen Mahlgraden

Figur 9 zeigt dass die erfindungsgemäßen Systeme geringfügig besser mattieren als Podax-MG1, sofern sie mit Teilchengrößen um die 8 $\mu$m eingesetzt werden. Zudem verleihen insbesondere die polaren Reiskleiewachsoxidate dem 1K-PUR-Lack eine hohe Kratzbeständigkeit, die zwar nicht an die Kratzbeständigkeit von Kerry-MG1 heranreicht (Figur 10), aber stattdessen den Vorteil der deutlich helleren Farbe (siehe IFZ, Tabelle 3) gegenüber dem Kerry-MG1 bietet. Dieser Vorteil kann für farblose Lackanwendungen von entscheidender Bedeutung sein, um eine Verfärbung der Lackierung zu verhindern.

Im vorgenommenen sensorischen Blindtest wurde eine leicht verbesserte Haptik der erfindungsgemäßen Systeme gegenüber den Vergleichsprodukten festgestellt. Der haptische Eindruck war etwas glatter und trockener im Griff.

**Beispiel 4: Lösemittelhaltiger 2-K PUR-Lack**

**1. Komponente**

| | | | |
|---|---|---|---|
| i) | Desmophen 1300 / 75 %ig in Xylol | 32,0 Gew.-% |
| ii) | Walsroder Nitrocellulose E 510 in 20% ESO | 1,5 Gew.-% |
| iii) | Acronal 4 L 10%ig in Ethylacetat | 0,2 Gew.-% |
| iv) | Baysilone OL 17 10%ig in Xylol | 0,2 Gew.-% |
| v) | Ethylacetat | 10,4 Gew.-% |
| vi) | n-Butylacetat | 11,0 Gew.-% |
| vii) | Methoxypropylacetat | 10,8 Gew.-% |
| viii) | Xylol | 8.9 Gew.-% |
| | | 75,0 Gew.-% |

• **2. Komponente**

| | | |
|---|---|---|
| i) | Desmodur IL BA | 14,2 Gew.-% |
| ii) | Desmodur L 75 | 9,4 Gew.-% |
| iii) | Xylol | 1.4 Gew.-% |
| | | 25,0 Gew.-% |
| Zugabe von mWA zum Grund-Lack | | 2,0 Gew.-% / 4,0 Gew.-% |

Der Lack wurde unter Verwendung eines Propellerrührers in der dargestellten Reihenfolge hergestellt.

Die Bestandteile der ersten Komponente wurden in einem geeigneten Gefäß mit einem Propellerrührer für mehrere Stunden (bis Nitrocellulose gelöst) bei ca. 1000 rpm homogenisiert. Die Bestandteile der zweiten Komponente wurden separat in einem geeigneten Gefäß unter händischem Rühren homogenisiert. Der Lack wird im Ultraschallbad entgast. Die Lackherstellung erfolgte durch händisches Verrühren von Komponente 1 und 2 direkt vor dem Lackauftrag auf die Substrate.

Das mikronisierte Wachsadditiv wurden zuvor der Komponente 1 zugegeben (bei 500 rpm), und an einem Dissolver bei 2000 rpm für 20 min eingearbeitet.

Zur Herstellung der Proben wurden Nassfilme von 60 $\mu$m auf Glasplatten aufgerakelt. Die Prüfkörper zur Prüfung der Haptik wurden durch einen dreischichtigen Pinselauftrag (Kreuzgang) mit Zwischenschliff auf unbehandelte Vollholzplatten hergestellt.

Die Prüfung erfolgte nach 48h Trocknungszeit im Klimaraum bei 23°C und einer Luftfeuchtigkeit von 50%.

**Prüfung in einem lösemittelhaltigen 2-komponentigen PUR Lack:**

Die Wirkung des mWA wird durch den Glanz, Gleitreibungskoeffizient sowie die Scheuerfestigkeit in der oben angegebenen Richtformulierung quantifiziert. Für Glanzperformance und Gleitreibungskoeffizienten sind in 2-K PUR Lacken verhältnismäßig niedrige Werte wünschenswert. Bei der Kratzbeständigkeit sind in 2-K PUR Lacken hohe Werte wünschenswert.

Tabelle 10: Anwendungstests 2-K PUR Lack, mWA

| Eingesetzte Probe | Eingesetzte Menge [Gew.-%] | Glanz 60° [ ] | Gleitreibungskoeffizient (rel.) [ ] | Kratzbeständigkeit [N] | Haptik [ ] |
|---|---|---|---|---|---|
| Kerry-MG1 (Vgl. 14) | 2,0 | 65,2 | 0,36 | 2,2 | B |
| | 4,0 | 32,3 | 0,34 | 2,45 | B |
| nSZ-MG1 (Erf. 24) | 2,0 | 72,8 | 0,35 | 2,1 | A |
| | 4,0 | 38,3 | 0,34 | 2,45 | A |
| mSZ-MG1(Erf. 25) | 2,0 | 67,4 | 0,36 | 1,7 | A |
| | 4,0 | 36,1 | 0,34 | 1,9 | A |
| hSZ-MG1(Erf. 26) | 2,0 | 59,3 | 0,34 | 2,0 | A |
| | 4,0 | 30,6 | 0,32 | 2,15 | A |
| seifSZ-MG1(Erf. 27) | 2,0 | 62,5 | 0,36 | 2,05 | A |
| | 4,0 | 28,9 | 0,32 | 2,55 | A |
| Montan-MG1 (Vgl. 15) | 2,0 | 61,9 | 0,33 | 2,05 | C |
| | 4,0 | 30 | 0,32 | 2,4 | C |
| Podax-MG1 (Vgl. 16) | 2,0 | 84,6 | 0,32 | 1,9 | B |
| | 4,0 | 49,1 | 0,32 | 1,7 | B |
| Kerry-MG2 (Vgl. 17) | 2,0 | 69,1 | 0,39 | 2,8 | B |
| | 4,0 | 32,1 | 0,37 | 3,0 | B |
| nSZ-MG2 (Erf. 28) | 2,0 | 73,3 | 0,4 | 2,8 | A |
| | 4,0 | 36,6 | 0,38 | 3,0 | A |
| mSZ-MG2 (Erf. 29) | 2,0 | 70 | 0,38 | 2,65 | A |
| | 4,0 | 36,7 | 0,39 | 3,1 | A |
| hSZ-MG2 (Erf. 30) | 2,0 | 65,4 | 0,36 | 2,45 | A |
| | 4,0 | 31,2 | 0,35 | 2,9 | A |
| seifSZ-MG2(Erf. 31) | 2,0 | 64,9 | 0,36 | 0,85 | A |
| | 4,0 | 33,3 | 0,34 | 1,85 | A |
| Montan-MG2 (Vgl. 18) | 2,0 | 71,9 | 0,38 | 2,35 | C |
| | 4,0 | 37,6 | 0,4 | 2,65 | C |

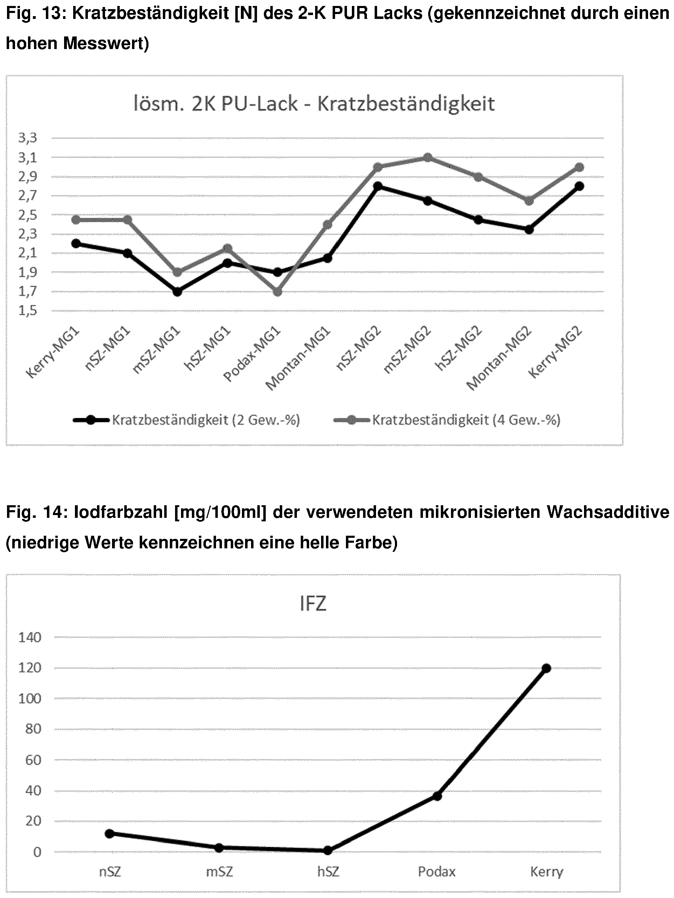

Die erfindungsgemäßen Beispiele (Erf. 24-31) aus Tabelle 10 zeigen im Vergleich zu den Vergleichssubstanzen (Vgl. 14-18) einen geringeren Glanz bzw. einen Mattierungseffekt bei gleichzeitig niedrigem Gleitreibungskoeffizienten, hoher Kratzbeständigkeit und die für Holzlacke wichtige angenehme Haptik.
Desweiteren wurden die Anwendungstests grafisch ausgewertet.

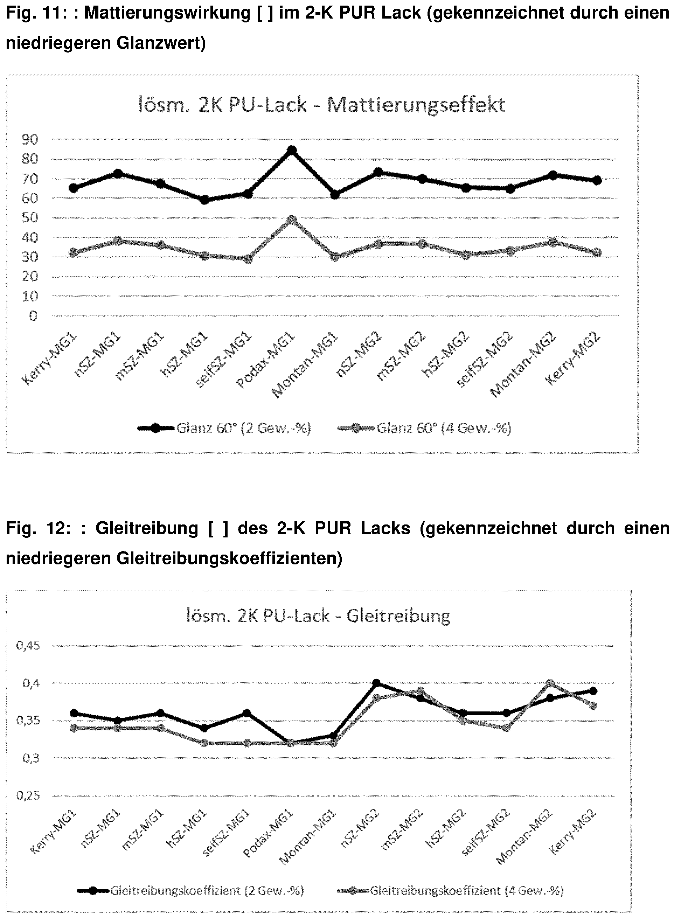

Figur 11 zeigt, dass die mit den erfindungsgemäßen Reiskleiewachsoxidate versetzten 2K PUR-Lacke einen geringeren Glanz aufweisen als die mit Podax-MG1 versetzten Lacke und Podax-MG1 weniger stark mattierend wirkt, als die restlichen mWAs.
Aus den Figuren 11 bis 13, die den Glanz, die Gleitreibung und die Kratzbeständigkeit der mit verschiedenen Wachsadditive versetzten 2-K PUR Lacke grafisch darstellen, ist erkennbar, dass Kerry-MG1 und Kerry-MG2 zwar noch etwas stärker als die erfindungsgemäßen Reiskleiewachsoxidate mattieren und auch bei der Kratzbeständigkeit mit den unpolareren Reiskleiewachsen nSZ-MG1 oder nSZ-MG2 vergleichbar (Figur 12 und 13) sind, allerdings geht aus Figur 12 hervor, dass sie durch den höheren Gleitreibungskoeffizienten eine etwas schlechtere Gleitreibung aufweisen. Zudem sind Kerry-MG1 und Kerry-MG2 deutlich dunkler (gekennzeichnet durch eine deutlich höhere Iodfarbzahl, siehe Figur 14), so dass die unpolaren Reiskleiewachsoxidate im unpolaren lösemittelbasierten 2-K PUR Lack die beste Kombination der wünschenswerten Eigenschaften aufweisen.

**Patentansprüche**

1. Reiskleiewachsoxidate für Wachsadditive, wobei diese optional durch ein Verfahren ausgewählt aus der Gruppe umfassend Hydrolyse, Alkoholyse, Veresterung, Amidierung, Verseifung, Ethoxylierung, Anhydridbildung und Decarboxylierung derivatisiert wurden,
   **dadurch gekennzeichnet, dass** sie eine volumenmittlere Partikelgröße $d_{50}$ zwischen 1 - 50 $\mu$m, gemessen nach ISO 13320-1, besitzen und **dadurch gekennzeichnet, dass** sie eine Säurezahl zwischen 15 und 140 mg KOH/g , gemessen nach ISO 2114, aufweisen.

2. Reiskleiewachsoxidate gemäß Anspruch 1 **dadurch gekennzeichnet, dass** sie eine volumenmittlere Partikelgröße $d_{50}$, gemessen nach ISO 13320-1, zwischen 5 - 15 $\mu$m, bevorzugt zwischen 7,0 - 13,0 $\mu$m und besonders bevorzugt zwischen 7,0 - 9,5 $\mu$m besitzen.

3. Reiskleiewachsoxidate gemäß Anspruch 1 oder 2, **dadurch gekennzeichnet, dass** die Derivatisierung eine Verseifung ist.

4. Reiskleiewachsoxidate gemäß einem oder mehreren der vorhergehenden Ansprüche, **dadurch gekennzeichnet, dass** sie eine Säurezahl zwischen 15 und 80 mg KOH/g, besonders bevorzugt zwischen 25 und 60 mg KOH/g, gemessen nach ISO 2114, aufweisen.

5. Reiskleiewachsoxidate gemäß einem oder mehreren der vorhergehenden Ansprüche, **dadurch gekennzeichnet, dass** sie eine Verseifungszahl zwischen 30 und 185 mg KOH/g, bevorzugt zwischen 50 und 130 mg KOH/g, besonders bevorzugt zwischen 60 und 110 mg KOH/g, gemessen nach ISO 3681, aufweisen.

6. Reiskleiewachsoxidate gemäß einem der vorhergehenden Ansprüche, **dadurch gekennzeichnet, dass** sie einen Tropfpunkt zwischen 70 und 110 °C, gemessen nach ISO 2176, aufweisen.

7. Reiskleiewachsoxidate gemäß einem der vorhergehenden Ansprüche, **dadurch gekennzeichnet, dass** diese mit Chromschwefelsäure, bevorzugt mit einer Mischung aus Chromtrioxid und Schwefelsäure hergestellt wurden.

8. Mikronisiertes Wachsadditiv für Druckfarben- und Lacksysteme, umfassend ein oder mehrere optional derivatisierte Reiskleiewachsoxidate gemäß einem der oder mehreren der Ansprüche 1 - 7.

9. Mikronisiertes Wachsadditiv gemäß Anspruch 8, **dadurch gekennzeichnet, dass** die ein oder mehreren, optional derivatisierten Reiskleiewachsoxidate in einer Menge von 40 - 100 Gew.-%, bezogen auf die Gesamtmasse des Wachsadditivs, enthalten sind.

10. Mikronisiertes Wachsadditiv gemäß einem oder mehreren der Ansprüche 8 - 9, **dadurch gekennzeichnet, dass** das mikronisierte Wachsadditiv einen Renewable Carbon Index (RCI) von 80 - 100% aufweist.

11. Verfahren zur Herstellung von Reiskleiewachsoxidaten gemäß einem der Ansprüche 1 - 7 oder von einem mikronisierten Wachsadditiv gemäß einem der Ansprüche 8 - 10, **dadurch gekennzeichnet, dass** die enthaltenen Komponenten gemeinsam auf einer Mühle bis zu einer volumenmittleren Partikelgröße $d_{50}$ zwischen 1 und 50 $\mu$m, gemessen nach ISO 13320-1, vermahlen werden.

12. Verfahren gemäß Anspruch 11, wobei es sich bei der Mühle um eine Pralltellermühle oder um eine Luftstrahlmühle, bevorzugt um eine Luftstrahlmühle, handelt.

13. Verwendung von einem mikronisierten Wachsadditiv gemäß einem der Ansprüche 8 - 10, für Druckfarben, Beschichtungen und Lacke.

**14.** Verwendung gemäß Anspruch 13, **dadurch gekennzeichnet, dass**

- es sich bei den Druckfarben um eine Offset-Druckfarbe oder um eine Flexodruckfarbe, bevorzugt um eine ölbasierte Offset-Druckfarbe oder um eine wasserbasierte Flexodruckfarbe handelt, oder
- es sich bei den Lacken um einen Pulverlack oder einen Holzlack oder um ein 1 K PUR Lacksystem oder um ein 2 K PUR Lacksystem, bevorzugt um ein wasserbasiertes 1 K PUR Lacksystem oder um ein wasserbasiertes 2 K PUR Lacksystem, ganz besonders bevorzugt um ein wasserbasiertes 2 K PUR Lacksystem handelt.

**15.** Verwendung gemäß einem oder mehreren der Ansprüche 13 - 14, **dadurch gekennzeichnet, dass** das mikronisierte Wachsadditiv in einer Menge von 0,1 - 10,0 Gew.-%, bevorzugt in einer Menge von 0,2 - 4,0% Gew.-%, bezogen auf die Gesamtmasse der Druckfarbe, der Beschichtung oder des Lacks, eingesetzt wird.

**16.** Verwendung gemäß einem oder mehreren der Ansprüche 13 - 15, **dadurch gekennzeichnet, dass** das mikronisierte Wachsadditiv direkt oder als Dispersion zur Druckfarbe, zur Beschichtung oder zum Lack gegeben wird.

**17.** Verwendung gemäß einem oder mehreren der Ansprüche 13 - 16, **dadurch gekennzeichnet, dass** eine Dispersion eines Dispergens mit den mikronisierten Wachsadditiven oder mikronisierten Reiskleiewachsoxidate hergestellt wird, welche dann zur Druckfarbe, zur Beschichtung oder zum Lack gegeben wird.

**18.** Verwendung des mikronisierten Wachsadditivs gemäß einem der Ansprüche 8-10 als

- Entgasungs-, Verlaufs-, Gleit- und/oder Dispergierungshilfsmittel für Kunststoffe, oder
- Hydrophobierungsadditiv in Pflanzenschutzpräparationen.

**Claims**

**1.** Rice bran wax oxidates for wax additives, optionally derivatized by a method selected from the group comprising hydrolysis, alcoholysis, esterification, amidation, saponification, ethoxylation, anhydride formation and decarboxylation,

**characterized in that** they have a volume-average particle size $d_{50}$ of between 1-50 $\mu$m, measured to ISO 13320-1, and
**characterized in that** they have an acid number between 15 and 140 mg KOH/g, measured to ISO 2114.

**2.** Rice bran wax oxidates as claimed in claim 1, **characterized in that** they have a volume-average particle size $d_{50}$, measured to ISO 13320-1, of between 5-15 $\mu$m, preferably between 7.0-13.0 $\mu$m and more preferably between 7.0-9.5 $\mu$m.

**3.** Rice bran wax oxidates as claimed in claim 1 or 2, **characterized in that** the derivatization is a saponification.

**4.** Rice bran wax oxidates as claimed in one or more of the preceding claims, **characterized in that** they have an acid number between 15 and 80 mg KOH/g, more preferably between 25 and 60 mg KOH/g, measured to ISO 2114.

**5.** Rice bran wax oxidates as claimed in one or more of the preceding claims, **characterized in that** they have a saponification number between 30 and 185 mg KOH/g, preferably between 50 and 130 mg KOH/g, more preferably between 60 and 110 mg KOH/g, measured to ISO 3681.

**6.** Rice bran wax oxidates as claimed in any of the preceding claims, **characterized in that** they have a dropping point between 70 and 110°C, measured to ISO 2176.

**7.** Rice bran wax oxidates as claimed in any of the preceding claims, **characterized in that** they have been produced with chromosulfuric acid, preferably with a mixture of chromium trioxide and sulfuric acid.

**8.** A micronized wax additive for printing ink and paint systems, comprising one or more optionally derivatized rice bran wax oxidates as claimed in one or more of claims 1-7.

9. The micronized wax additive as claimed in claim 8, **characterized in that** the one or more optionally derivatized rice bran wax oxidates are present in an amount of 40-100% by weight, based on the total mass of the wax additive.

10. The micronized wax additive as claimed in one or more of claims 8-9, **characterized in that** the micronized wax additive has a renewable carbon index (RCI) of 80-100%.

11. A process for producing rice bran wax oxidates as claimed in any of claims 1-7 or a micronized wax additive as claimed in any of claims 8-10, **characterized in that** the components present are ground collectively in a mill down to a volume-average particle size $d_{50}$ of between 1 and 50 $\mu$m, measured to ISO 13320-1.

12. The process as claimed in claim 11, wherein the mill is an impact plate mill or an airjet mill, preferably an airjet mill.

13. The use of a micronized wax additive as claimed in any of claims 8-10 for printing inks, coatings and paints.

14. The use as claimed in claim 13, **characterized in that**

- the printing inks are an offset printing ink or a flexographic printing ink, preferably an oil-based offset printing ink or a water-based flexographic printing ink, or
- the paints are a powder coating material or a wood paint or a 1K PUR paint system or a 2K PUR paint system, preferably a water-based 1K PUR paint system or a water-based 2K PUR paint system, most preferably a water-based 2K PUR paint system.

15. The use as claimed in one or more of claims 13-14, **characterized in that** the micronized wax additive is used in an amount of 0.1-10.0% by weight, preferably in an amount of 0.2-4.0% by weight, based on the total mass of the printing ink, coating or paint.

16. The use as claimed in one or more of claims 13-15, **characterized in that** the micronized wax additive is added directly or as a dispersion to the printing ink, coating or paint.

17. The use as claimed in one or more of claims 13-16, **characterized in that** a dispersion of a dispersant with the micronized wax additives or micronized rice bran wax oxidates is produced, and this is then added to the printing ink, coating or paint.

18. The use of the micronized wax additive as claimed in any of claims 8-10 as

- devolatilizing, leveling, sliding and/or dispersing auxiliary for plastics, or
- hydrophobizing additive in plant protection preparations.

**Revendications**

1. Oxydats de cire de son de riz pour les additifs de cire, éventuellement dérivés par une méthode choisie dans le groupe comprenant l'hydrolyse, l'alcoolyse, l'estérification, l'amidation, la saponification, l'éthoxylation, la formation d'anhydrides et la décarboxylation,

   **caractérisées par le fait qu'** ils ont une taille de particule moyenne en volume $d_{50}$ comprise entre 1 et 50 $\mu$m, mesurée selon la norme ISO 13320-1, et
   **caractérisés par** un indice d'acidité compris entre 15 et 140 mg KOH/g, mesuré selon la norme ISO 2114.

2. Oxydats de cire de son de riz selon la revendication 1, **caractérisés par le fait qu'**ils ont une taille de particule moyenne en volume $d_{50}$, mesurée selon la norme ISO 13320-1, comprise entre 5 et 15 $\mu$m, de préférence entre 7,0 et 13,0 $\mu$m et plus préférentiellement entre 7,0 et 9,5 $\mu$m.

3. Oxydats de cire de son de riz selon la revendication 1 ou 2, **caractérisés par le fait que** la dérivatisation est une saponification.

4. Oxydats de cire de son de riz selon l'une ou plusieurs des revendications précédentes, **caractérisés par** un indice d'acidité compris entre 15 et 80 mg KOH/g, de préférence entre 25 et 60 mg KOH/g, mesuré selon la norme ISO 2114.

**5.** Oxydats de cire de son de riz selon l'une ou plusieurs des revendications précédentes, **caractérisés par** un indice de saponification compris entre 30 et 185 mg KOH/g, de préférence entre 50 et 130 mg KOH/g, plus préférentiellement entre 60 et 110 mg KOH/g, mesuré selon la norme ISO 3681.

**6.** Oxydats de cire de son de riz selon l'une quelconque des revendications précédentes, **caractérisés par** un point de goutte compris entre 70 et 110°C, mesuré selon la norme ISO 2176.

**7.** Oxydats de cire de son de riz selon l'une quelconque des revendications précédentes, **caractérisés par le fait qu'**ils ont été produits avec de l'acide chromosulfurique, de préférence avec un mélange de trioxyde de chrome et d'acide sulfurique.

**8.** Additif de cire micronisé pour les systèmes d'encre d'impression et de peinture, comprenant un ou plusieurs oxydats de cire de son de riz éventuellement dérivatisés selon l'une ou plusieurs des revendications 1 à 7.

**9.** Additif de cire micronisé selon la revendication 8, **caractérisé par le fait que** le ou les oxydats de cire de son de riz éventuellement dérivés sont présents dans une proportion de 40 à 100 % en poids, par rapport à la masse totale de l'additif de cire.

**10.** Additif de cire micronisé selon l'une ou plusieurs des revendications 8 à 9, **caractérisé par le fait que** l'additif de cire micronisé a un indice de carbone renouvelable (ICR) de 80 à 100 %.

**11.** Procédé de production d'oxydats de cire de son de riz selon l'une des revendications 1 à 7 ou d'un additif de cire micronisé selon l'une des revendications 8 à 10, **caractérisé par le fait que** les composants présents sont broyés collectivement dans un moulin jusqu'à une taille de particule moyenne en volume $d_{50}$ comprise entre 1 et 50 $\mu$m, mesurée selon la norme ISO 13320-1.

**12.** Procédé selon la revendication 11, dans lequel le broyeur est un broyeur à plaques à impact ou un broyeur à jet d'air, de préférence un broyeur à jet d'air.

**13.** Utilisation d'un additif de cire micronisé selon l'une des revendications 8 à 10 pour les encres d'imprimerie, les revêtements et les peintures.

**14.** Utilisation selon la revendication 13, **caractérisée par le fait que**

- les encres d'impression sont des encres d'impression offset ou des encres d'impression flexographique, de préférence des encres d'impression offset à base d'huile ou des encres d'impression flexographique à base d'eau, ou
- les peintures sont un matériau de revêtement en poudre ou une peinture pour bois ou un système de peinture PUR 1K ou un système de peinture PUR 2K, de préférence un système de peinture PUR 1K à base d'eau ou un système de peinture PUR 2K à base d'eau, de préférence un système de peinture PUR 2K à base d'eau.

**15.** Utilisation selon une ou plusieurs des revendications 13-14, **caractérisée par le fait que** l'additif de cire micronisée est utilisé dans une proportion de 0,1 à 10,0 % en poids, de préférence dans une proportion de 0,2 à 4,0 % en poids, par rapport à la masse totale de l'encre d'imprimerie, du revêtement ou de la peinture.

**16.** Utilisation selon l'une ou plusieurs des revendications 13 à 15, **caractérisée par le fait que** l'additif de cire micronisée est ajouté directement ou sous forme de dispersion à l'encre d'imprimerie, au revêtement ou à la peinture.

**17.** Utilisation selon une ou plusieurs des revendications 13 à 16, **caractérisée par** la production d'une dispersion d'un dispersant avec les additifs de cire micronisés ou les oxydats de cire de son de riz micronisés, qui est ensuite ajoutée à l'encre d'imprimerie, au revêtement ou à la peinture.

**18.** Utilisation de l'additif de cire micronisé selon l'une des revendications 8 à 10, en tant que

- auxiliaire de dégraissage, d'égalisation, de glissement et/ou de dispersion pour matières plastiques, ou
- additif hydrophobe dans les préparations phytopharmaceutiques.

**Fig. 1: Glanz [ ] der Flexodruckfarbe 1 unter Verwendung der ausgeprüften Mikronisate**

Flexodruckfarbe 1 - Glanz

**Fig. 2: Glanz [ ] der Flexodruckfarbe 2 unter Verwendung der ausgeprüften mWA**

Flexodruckfarbe 2 - Glanz

**Fig. 3: Gleitreibung [ ] der Flexodruckfarbe 1 unter Verwendung der ausgeprüften mWA**

Flexodruckfarbe 1 - Gleitreibung

(Die Gleitreibungskoeffizienten der Farbe enthaltend 0,5 Gew.-% sind identisch mit denen der Farbe mit 0,8 Gew.-% Mikronisat, so dass die Kurven übereinander liegen)

**Fig. 4: Gleitreibung [ ] der Flexodruckfarbe 2 unter Verwendung der ausgeprüften mWA**

Flexodruckfarbe 2 - Gleitreibung

**Fig. 5: Scheuerfestigkeit [ ] (geringerer Farbabrieb) einer Offsetdruckfarbe nach Zugabe verschiedener mWA**

Offestdruckfarbe - Scheuerfestigkeit

**Fig. 6: Scheuerfestigkeit [ ] (geringerer Farbabrieb) einer Offsetdruckfarbe nach Zugabe verschiedener mWAs**

Offsetdruckfarbe - Scheuerfestigkeit

**Fig. 7: Gleitreibung [ ] des 1-K PUR Lackes unter Verwendung der ausgeprüften mWA mit einer Teilchengröße von 12 µm**

wässr. 1-K PUR Lack - Gleitreibung - 12 µm

**Fig. 8: Gleitreibung [ ] des 1-K PUR Lackes unter Verwendung der ausgeprüften mWA mit einer Teilchengröße von 8 µm**

wässr. 1K PUR Lack - Gleitreibung - 8 µm

**Fig. 9: Mattierungseffekt [ ] im 1-K PUR Lack (gekennzeichnet durch einen niedriegeren Glanzwert)**

**Fig. 10: Kratzbeständigkeit [N] des 1-K PUR Lacks (gekennzeichnet durch einen hohen Messwert)**

**Fig. 11: : Mattierungswirkung [ ] im 2-K PUR Lack (gekennzeichnet durch einen niedriegeren Glanzwert)**

**Fig. 12: : Gleitreibung [ ] des 2-K PUR Lacks (gekennzeichnet durch einen niedriegeren Gleitreibungskoeffizienten)**

**Fig. 13: Kratzbeständigkeit [N] des 2-K PUR Lacks (gekennzeichnet durch einen hohen Messwert)**

**Fig. 14: Iodfarbzahl [mg/100ml] der verwendeten mikronisierten Wachsadditive (niedrige Werte kennzeichnen eine helle Farbe)**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010020304 A

- EP 2909273 A